(19) **Europäisches Patentamt / European Patent Office / Office européen des brevets**

(11) **EP 1 658 694 B1**

(12) **FASCICULE DE BREVET EUROPEEN**

(45) Date de publication et mention de la délivrance du brevet:
**31.10.2007 Bulletin 2007/44**

(21) Numéro de dépôt: **04786277.6**

(22) Date de dépôt: **06.08.2004**

(51) Int Cl.:
*H04L 1/00* (2006.01)    *H04L 1/06* (2006.01)

(86) Numéro de dépôt international:
**PCT/FR2004/002104**

(87) Numéro de publication internationale:
**WO 2005/025118 (17.03.2005 Gazette 2005/11)**

(54) **PROCEDE ET DISPOSITIF D'EGALISATION ET DE DECODAGE ITERATIF POUR COMMUNICATION A ANTENNES MULTIPLES EN EMISSION ET EN RECEPTION**

ITERATIVES DECODIERUNGS- UND ENTZERRUNGSVERFAHREN UND VORRICHTUNG FÜR KOMMUNIKATION MIT MEHREREN SENDE- UND EMPFANGSANTENNEN

ITERATIVE DECODING AND EQUALIZION METHOD AND APPARATUS FOR COMMUNICATION WITH MULTIPLE TRANSMISSION AND RECEPTION ANTENNAS

(84) Etats contractants désignés:
**AT BE BG CH CY CZ DE DK EE ES FI FR GB GR HU IE IT LI LU MC NL PL PT RO SE SI SK TR**

(30) Priorité: **29.08.2003 FR 0310290**

(43) Date de publication de la demande:
**24.05.2006 Bulletin 2006/21**

(73) Titulaire: **FRANCE TELECOM
75015 Paris (FR)**

(72) Inventeurs:
• **VISOZ, Raphael
  F-92130 Issy-les-Moulineaux (FR)**
• **CHTOUROU, Sami
  F-75013 Paris (FR)**
• **BERTHET, Antoine
  F-92290 Chatenay Malabry (FR)**

(74) Mandataire: **Desormiere, Pierre-Louis et al
Cabinet Beau de Loménie,
158, rue de l'Université
75340 Paris Cedex 07 (FR)**

(56) Documents cités:
**EP-A- 1 069 722**

• YU X: "INTERATIVE TURBO DECODER WITH DECISION FEEDBACK EQUALIZER FOR SIGNALS TRANSMITTED OVER MULTIPATH CHANNELS" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY: IEEE, US, vol. 3 OF 4. CONF. 53, 6 mai 2001 (2001-05-06), pages 1634-1638, XP001082420 ISBN: 0-7803-6728-6
• HONIG M ET AL: "Adaptive decision feedback turbo equalization" PROCEEDINGS 2002 IEEE INTERNATIONAL SYMPOSIUM ON INFORMATION THEORY. ISIT 02. LAUSANNE, SWITZERLAND, JUNE 30 - JULY 5, 2002, IEEE INTERNATIONAL SYMPOSIUM ON INFORMATION THEORY, NEW YORK, NY: IEEE, US, 30 juin 2002 (2002-06-30), pages 413-413, XP010602124 ISBN: 0-7803-7501-7
• NOORBAKHSH M ET AL: "Combined turbo equalisation and block turbo coded modulation" IEE PROCEEDINGS: COMMUNICATIONS, INSTITUTION OF ELECTRICAL ENGINEERS, GB, vol. 150, no. 3, 13 mai 2003 (2003-05-13), pages 149-152, XP006020423 ISSN: 1350-2425

**EP 1 658 694 B1**

## Description

La présente invention est relative au domaine des communications numériques.

Elle concerne plus particulièrement un procédé et un dispositif d'égalisation et de décodage itératif pour communications haut-débit sur canaux à antennes multiples en émission et plus particulièrement sur canaux sélectifs en fréquence à antennes multiples en émission et réception.

DOMAINE TECHNIQUE GENERAL

Avec le développement des technologies antennaires, les modèles de communication reposant sur le TDMA, le CDMA, POFDM et leurs éventuelles combinaisons sont systématiquement revisités et étendus au cas de canaux MIMO. Deux grandes classes de codage espace-temps sont envisagées, qui diffèrent dans leurs philosophies :

Les transmissions en couches BLAST développées par les Bell Labs ont pour but d'utiliser le multiplexage spatial pour augmenter le débit transmissible sur le canal. Il existe deux manières de coupler codage correcteur d'erreurs de canal et BLAST, conduisant à deux modèles de codage espace-temps en couches distinctes. Dans le premier modèle (type ST BICM), un codage unique liant les différentes couches est appliqué sur les données avant entrelacement spatio-temporel et démultiplexage spatial [1, LST-1, p. 1350]. Dans le second modèle (type MAC), les données sont démultiplexées spatialement puis codées en entrelacées indépendamment sur chaque couche [1,LST-II, p. 1350] ;

Les schémas de diversité utilisent la diversité spatiale pour mieux combattre les effets des évanouissements du canal, et améliorer les performances. On distingue les STTC, qui amènent un gain de codage, et les STBC, (et leurs généralisations OD, LDC...), qui n'amènent pas de gain de 5 codage et qui sont souvent couplés avec les meilleures modulations codées en treillis connues pour le canal gaussien.

De récentes contributions théoriques prouvent que les gains de multiplexage spatial et de diversité spatiale sont liés au travers d'une relation de compromis. Par exemple, les deux approches précitées ne permettent pas d'augmenter la capacité dans les mêmes proportions pour un nombre arbitrairement élevé d'antennes d'émission M et d'antennes de réception N. On peut vérifier que les schémas de diversité à l'émission ne sont optimaux du point de vue de la théorie de l'information que dans la configuration MISO $\{M, N\} = \{2,1\}$, ce qui remet sérieusement en cause leur pertinence pour les communications haut-débit sur des canaux MIMO à grand nombre d'antennes.

Seule l'approche ST-BICM garantit une augmentation linéaire de la capacité avec min $\{M, N\}$.

C'est la raison pour laquelle il convient de privilégier ce type d'émission et de concentrer les efforts sur la conception d'un récepteur adapté garantissant une performance aussi proche que possible des limites fondamentales. A la différence des STBC, les ST-BICM n'assurent pas l'orthogonalité entre les flux de données émis par les différentes antennes.

Dans le contexte d'une transmission sur canal MIMO sélectif en fréquence, cette stratégie de codage appelle donc, en réception, une détection conjointe des données pour supprimer à la fois l'interférence spatiale entre antennes (MAI) et l'interférence temporelle entre symboles (ISI).

La fonction de détection conjointe des données constitue le point délicat et complexe du récepteur, et ce d'autant plus que les ST-BICM nécessitent, par essence, un traitement itératif entre détection et décodage de canal pour capturer toute la diversité spatiale.

PRESENTATION GENERALE DE L'ART ANTERIEUR

Décodage itératif sur canaux MIMO non sélectifs en féquence

Le décodage itératif des ST-BICM sur canaux MIMO non sélectifs en fréquence constitue un cas particulier du problème à résoudre sous la double hypothèse d'une élimination parfaite de l'ISI et d'une récupération de toute l'énergie disponible sur chaque symbole.

Le problème se reformule alors en ces termes : « suppression de la MAI sur un canal MIMO plat en présence de bruit coloré spatialement ». Il nécessite le calcul des APP sur les bits des symboles des vecteurs transmis à chaque instant (statistique sur les données à transmettre au décodeur).

Deux méthodes ont été retenues dans la littérature :

- Calcul exact des APP basé sur une liste exhaustive (MAP). La complexité de cette méthode est prohibitive, puisque exponentielle en le nombre d'antennes émettrices M et polynomiale en l'ordre Q des constellations employées.
- Calcul approché des APP à partir d'une liste réduite de vecteurs candidats générée par un algorithme de décodage par sphère [2]. L'algorithme de décodage par sphère présente au moins deux avantages : il préserve le critère MAP et possède une complexité en O (M3), insensible à l'ordre Q des constellations employées. On précise que l'algorithme de décodage par sphère peut être vu comme une variante de l'algorithme de décodage séquentiel de Fano.

- Calcul approché des APP à partir d'une liste réduite de vecteurs candidats générée par un algorithme séquentiel employant une pile (stack algorithm).

L'algorithme de décodage par sphère a été intensivement étudié pour les canaux MIMO non sélectifs en fréquence. Sa généralisation au cas des canaux MIMO sélectifs en fréquence est non triviale.

Une approche brutale serait de rappliquer par blocs. Cette approche est peu intéressante car elle augmente artificiellement la dimension de l'espace de recherche (et donc la complexité) et introduit un décodage redondant des symboles.

L'algorithme décrit dans [2] est dérivé pour des canaux MIMO non sélectifs en fréquence. Sa généralisation au cas des canaux MIMO sélectifs en fréquence est un problème ouvert.

La performance de ces deux algorithmes est essentiellement déterminée par la qualité de la liste de candidats générée, préférentiellement de taille fixe. Il est primordial qu'elle comporte le meilleur candidat décodant un bit 1 et le meilleur candidat décodant un bit 0 à toute position.

Décodage itératif sur canaux MIMO sélectifs en fréquence

Plusieurs types de détecteurs insérés dans des structures itératives ont été proposés.

- Détecteur à entrées et sorties pondérées réalisant le critère du MAP basé sur l'algorithme BCJR. La complexité de ce récepteur, en O(QLxM), est clairement prohibitive pour des modulations d'ordre élevé et des canaux MIMO à grand nombre d'entrées et mémoire élevée.
- Détecteurs à entrées et sorties pondérées sous-optimaux basés sur des algorithmes de recherche efficaces dans des treillis fortement réduits en nombre d'états [3], et, le cas échéant, précédés de filtres à minimum de phase. Cette approche est encore limitée par sa complexité, en O(QLrxM) où Lr représente la longueur de contrainte réduite. En particulier, l'emploi de constellations à grand nombre d'états est exclu.

Les détecteurs non linéaires construits à partir d'une annulation linéaire itérative de l'interférence ([4] dans un contexte de détection multi utilisateur). La transposition de ces détecteurs dans un contexte MIMO est en générale basée sur l'analogie entre antennes et utilisateurs différents. Leurs implémentations nécessitent donc un filtre par antenne et leurs performances sont limitées par l'approche disjointe MMSE par antennes. Cette approche présente l'avantage d'avoir une complexité polynomiale en nombre d'antennes d'émission.

Le document "Interactive turbo decoder with decision feedback equalizer for signals transmitted over multipath channels" par Yu X., Veh. Tech. Conf. Vol.3, p. 1634 - 1638, 06.05.2001, révèle un égalisateur à retour de décision et un décodeur itératif.

PRESENTATION DE L'INVENTION

Un but de l'invention est de proposer un récepteur avancé pour les transmissions numériques haut-débit pour canaux sélectifs en fréquence à antennes multiples en émission et réception, qui soit peu complexe - et notamment qui ne nécessite pas des puissances de calcul importantes-tout en permettant de traiter l'interférence spatiale entre antennes et l'interférence temporelle entre symboles.

A cet effet, l'invention propose un dispositif d'égalisation et de décodage itératif pour communications haut-débit sur canaux sélectifs en fréquence à antennes multiples en émission et en réception, comportant un égaliseur à retour de décision qui reçoit les données des différentes antennes de réception, cet égaliseur comportant un filtre avant, ainsi qu'un filtre arrière récursif alimenté par une reconstitution pondérée des données calculée à partir de la sortie d'un décodeur lui-même alimenté par des moyens de prise de décision, le dispositif comportant en outre des moyens pour soustraire la sortie dudit filtre arrière aux données en sortie du filtre avant, les données ainsi soustraites étant transmises en entrée des moyens de prise de décision avec la sortie du décodeur, les moyens de prise de décision générant en outre une statistique transmise à destination d'un décodeur de canal à entrées et sorties pondérées, lesdits moyens de prise de décision prenant en compte la corrélation spatiale du bruit en sortie des moyens de soustraction, lesdits moyens de prise de décision et le décodeur étant séparés par des procédés d'entrelacement spatio-temporel au niveau binaire, caractérisé en ce que le filtre avant et arrière sont adapté de façon itérative pour minimiser l'erreur quadratique moyenne en sortie du soustracteur.

Un tel dispositif est avantageusement complété par les différentes caractéristiques prises seules ou selon toutes leurs combinaisons techniquement possibles :

- les moyens de décision en sortie des moyens de soustraction de l'égaliseur sont de type blanchiment spatial suivi d'un décodage par sphère ;

- les moyens de décision en sortie des moyens de soustraction de l'égaliseur sont de type SIC/PIC (suppression d'interférence spatiale résiduelle en sortie des moyens de soustraction de l'égaliseur, en série et/ou en parallèle) ;
- le blanchiment spatial est mis en oeuvre en sortie des moyens de soustraction de l'égaliseur ;
- le blanchiment spatial est mis en oeuvre par les moyens de prise de décision ;
- le blanchiment spatial est mis en oeuvre par les filtres avant et arrière ;
- à partir d'une certaine itération, le filtre avant est un filtre adapté, le filtre arrière le même filtre adapté moins le coefficient central.

L'invention découle d'une approche originale radicalement différente de celles considérant les antennes comme des utilisateurs différents. En effet, le signal transmis est vu comme une modulation T-dimensionnelle, T étant le nombre d'antennes en émission. Ce changement de point de vue a des conséquences considérables sur le design du récepteur. Le récepteur se décompose en un égaliseur linéaire itératif, considérant à son entrée une modulation vectorielle T-dimensionnelle convoluée à un canal sélectif en fréquence, suivi d'un détecteur de modulation T-dimentionnelle (par exemple sphère décodeur) capable de générer des informations souples pour le décodeur de canal. Cette approche présente deux avantages par rapport à l'art antérieur. Elle est moins complexe car elle nécessite un unique filtre (vectorielle) et est plus performante car elle permet le choix du critère de la détection vectorielle.

L'invention concerne également un système de communication haut-débit sur canaux sélectifs en fréquence à antennes multiples en émission et en réception, caractérisé en ce qu'il comporte en réception un dispositif d'égalisation et de décodage du type précité.

Avantageusement notamment, les moyens d'émission sont de type ST-BICM.

En outre, l'invention propose un procédé d'égalisation et de décodage itératif pour communications haut-débit sur canaux sélectifs en fréquence à antennes multiples en émission et en réception, mettant en oeuvre un égaliseur à retour de décision qui reçoit les données des différentes antennes de réception, cet égaliseur comportant un filtre avant, ainsi qu'un filtre arrière récursif alimenté par une reconstitution pondérée des données calculée à partir de la sortie d'un décodeur lui-même alimenté par des moyens de prise de décision, le dispositif comportant en outre des moyens pour soustraire la sortie dudit filtre arrière aux données en sortie du filtre avant, les données ainsi soustraites étant transmises en entrée des moyens de prise de décision avec la sortie du décodeur, les moyens de prise de décision générant en outre une statistique transmise à destination d'un décodeur de canal à entrées et sorties pondérées, lesdits moyens de prise de décision prenant en compte la corrélation spatiale du bruit en sortie des moyens de soustraction, lesdits moyens de prise de décision et le décodeur étant séparés par des procédés d'entrelacement spatio-temporel au niveau binaire, caractérisé en ce que le filtre avant et arrière sont adaptés de façon itérative pour minimiser l'erreur quadratique moyenne en sortie du soustracteur.

PRESENTATION DES FIGURES

D'autres caractéristiques et avantages de l'invention ressortiront encore de la description qui suit, laquelle est purement illustrative et non limitative et doit être lue en regard des dessins annexés, sur lesquels :

- La Figure 1 illustre le concept de la technique VBLAST ;
- La Figure 2 illustre le modèle général de communication connu sous le nom de ST-BICM ;
- La Figure 3 illustre l'architecture d'un récepteur itératif conforme à un mode de réalisation de l'invention ;
- La Figure 4 illustre l'architecture d'un récepteur itératif qui peut être utilisé à partir par exemple de la deuxième itération ou des itérations suivantes.

DESCRIPTION D'UN OU PLUSIEURS MODES DE REALISATION DE L'INVENTION

Rappels sur la technique BLAST et le codage ST BICM

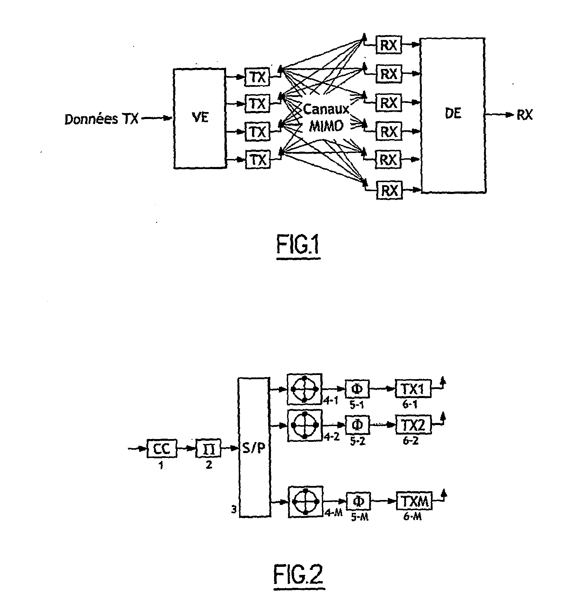

On a représenté sur la figure 1 le schéma général d'une architecture BLAST.

Les données codées dans un dispositif d'encodage vectoriel EV unique, sont transmises, après entrelacement spatio-temporel et démultiplexage spatial, sur une pluralité d'antennes d'émission TX ; à l'autre extrémité des canaux MIMO, les signaux émis sont reçus par une pluralité d'antennes de réception RX qui les renvoient sur des moyens de décodage DE (canaux MIMO) en sortie desquels on récupère les données.

Dans ce qui est décrit ci-après, on se place dans le cas de canaux MIMO sélectifs en fréquence. La présence d'interférences entre symboles augmente la complexité du récepteur.

La figure 2 illustre quant à elle le modèle général de communication connu sous le nom de ST BICM.

A l'émission, les données sont traitées par un code correcteur de canal 1 (codes convolutifs, turbo-codes, codes LDPC...), puis font l'objet d'un entrelacement appliqué au niveau binaire 2, d'un démultiplexage spatial 3, et, pour chaque couche, d'un procédé de modulation 4-1 à 4-M. Après un filtrage de mise en forme 5A à 5M, ies données ainsi modulées sont transmises à des antennes émettrices 6-1 à 6-M.

Description des traitements d'émission et de réception

A l'émission, les données font l'objet d'un traitement ST-BICM.

A cet effet, on met en oeuvre les étapes suivantes :

- Réception d'un flux de données numériques à un débit donné ;
- Application d'un codage correcteur de canal 1 générant un flux de données numériques codées ;
- Entrelacement des données numériques codées par un entrelaceur 2 opérant au niveau bit ;
- Démultiplexage spatial 3 du flux de données numériques codées entrelacées pour créer une pluralité de flux distincts de données numériques codées appelés couches émettrices ($M$ flux distincts ou couches émettrices) ;

Puis, pour chacun des M flux distincts de données numériques codées :

- Modulation du flux de données numériques codées entrelacées 15 conformément à un schéma de modulation (4-1 à 4-M) pour obtenir un flux de symboles modulés ;
- Filtrage du flux modulé (5-1 à 5-M) ;
- Transmission du flux modulé sur une antenne d'émission propre (6-1 à 6-M).

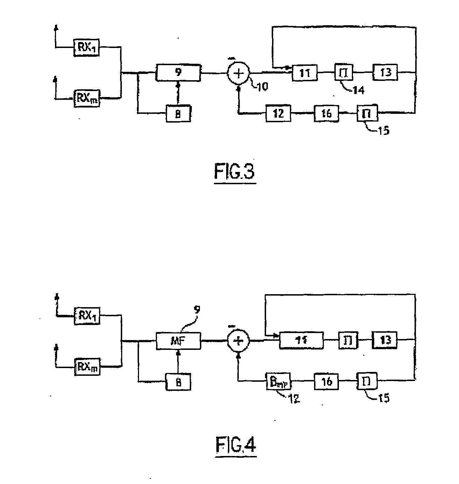

Le récepteur du système de transmission est illustré sur la Figure 3.

Il comprend un égaliseur à retour de décisions défini par un filtre avant 9, un soustracteur 10, un algorithme prise de décisions 11 et un filtre arrière récursif 12.

Le filtre arrière récursif 12 est alimenté par une reconstitution pondérée des données calculée à partir de la sortie d'un décodeur 13 lui-même alimenté par l'algorithme de prise de décision 11.

Le filtre avant 9 et le filtre arrière 12 sont déterminés de façon itérative pour minimiser l'erreur quadratique moyenne (MSE) de l'égaliseur MIMO, c'est-à-dire pour minimiser l'erreur en sortie du soustracteur 10.

Ils utilisent à cet effet une estimation initiale 8 du canal MIMO.

Le traitement mis en .oeuvre est par exemple du type de celui détaillé en annexe II.

On notera que, dans le cadre ce traitement, on travaille sur une estimation vectorielle de l'erreur résiduelle et du bruit, les filtres avant et arrière étant calculés par blocs pour minimiser ce vecteur.

Ce traitement vectoriel permet un calcul simplifié.

Les moyens de prise de décision 11 reçoivent en entrée les données en sortie du soustracteur 10, ainsi que la sortie du décodeur 13.

L'algorithme qu'ils mettent en oeuvre peut être de différent type. Il peut notamment être de type SIC/PIC (suppression d'interférence spatiale résiduelle en sortie des moyens de soustraction de l'égaliseur, en série et/ou en parallèle) (Annexe III).

En variante, il peut être un algorithme de décodage par sphère.

Un tel algorithme possède une complexité en O($M^3$) - où M est le nombre d'antennes d'émission - indépendante de Q.

Ceci rend possible l'utilisation de modulations à grand nombre d'états en vue d'augmenter le débit.

' La sortie des moyens 11 de prise de décision est transmise à un procédé de désentrelacement spatio-temporel 14, qui est mis en oeuvre au niveau binaire et qui est interposé entre lesdits moyens de prise de décision 11 et le décodeur 13.

La sortie du décodeur 13 est une probabilité sur bits.

Cette probabilité est transmise d'une part en entrée de l'algorithme 11 de prise de décision et d'autre part, après entrelacement spatio-temporel (procédé 15), à un traitement 16 de reconstitution pondérée des données.

Les données pondérées ainsi reconstituées sont celles qui sont transmises en entrée du filtre arrière 12.

La sortie du filtre arrière 12 correspond à une régénération pondérée des données.

Par ailleurs, on notera que l'erreur correspondant à l'interférence résiduelle et au bruit qui est injecté en entrée du soustracteur 10, est colorée à la fois temporellement et spatialement.

Si la corrélation temporelle a peu d'impact sur les traitements de l'égaliseur, la corrélation spatiale joue un rôle essentiel.

C'est pourquoi, dans un mode de réalisation, on réalise un blanchissement spatial par factorisation de Cholesky.

Ce blanchiment spatial est avantageusement mis en oeuvre en sortie du soustracteur 10.

Dans une variante en particulier, il peut être mis en oeuvre par l'algorithme 11 de décodage par sphère lui-même.

Il peut également être mis en oeuvre en étant intégré aux filtres avant et arrière 9 et 12.

Enfin, dans une variante de mise en oeuvre possible, le filtre avant 9 est avantageusement remplacé par un filtre adapté à partir d'un certain nombre d'itérations données, par exemple à partir de la seconde itération.

Comme le filtre arrière se déduit directement du filtre avant, il résulte donc, dans ce cas, de la convolution du filtre adapté avec le canal moins le coefficient central.

C'est ce qu'illustre la figure 4, sur laquelle le filtre avant 9 est un filtre adapté MF, tandis que le filtre arrière 12, dénommé $B_{MF}$, est le filtre adapté convolué avec le canal moins le coefficient central.

ANNEXE I

LISTE DES ACRONYMES

TDMA : Accès multiple à répartition dans le temps (Time Division Multiple Access) 5 CDMA : Accès multiple par répartition dans le code (Code Division Multiple Access)
OFDM : Multiplexage par répartition orthogonale de la fréquence (Orthogonal Frequency Division Multiplex)
MIMO : Entrée multiple sortie multiple (Multiple Input Multiple Output)
SISO : Simple entrée simple sortie (Single Input Single Output)
BLAST : Couche spatio-temporelle des laboratoires Bell (Bell Labs Layered Space Time)
ST-BICM : Modulation codée spatio-temporelle avec entrelacement binaire Space-Time Bit-Interleaved Coded Modulation)
STTC : Code treillis spatio-temporel (Space-Time Trellis Codes)
STBC : Code bloc spatio-temporel (Space-Time Block Codes)
MAI : Brouillage accès multiple (Multiple Access Interference)
ISI : Interférence inter symbole (Inter Symbol Interference)
APP : Probabilité A Posteriori (A Posteriori Probability)
BCJR : Bahl, Cocke, Jelinek, Raviv (algorithme de) (Bahl, Cocke, Jelinek, Raviv (algorithm of))
MF : Filtre adapté (Matched Filter)
WMF : Filtre adapté blanc (Whitening Matched Filter)
MAP : Maximum A Posteriori (Maximum A Posteriori)
MMSE : Erreur quadratique moyenne minimum (Minimum Mean Square Error)
IC : Annulation d'interférence (Interference Cancellation)
Soft-IC : Annulation d'interférence souple (Soft-interference Cancellation)
SIC : Annulation d'interférence série (Serial Interference Cancellation)
PIC : Annulation d'interférence parallèle (Parallel Interference Cancellation)
LDPC : Contrôle de parité de faible densité (Low Density Parity Check)

ANNEXE II

MODELE DE COMMUNICATION

On considère un canal P-bloc à entrées et sorties multiple à T antennes d'émission et R antennes de réception sélectif en fréquence de mémoire M.

A. Modulation codée d'entrelacement binaire spatio-temporel

Soit C un code linéaire de longueur $N_C$ et de rendement $\rho_C$ sur $F_2$ admettant un vecteur de donnée $u \in F_2^{\rho_C N}$ et produisant un mot codé $c \in F_2^N$. Nous supposons que le rendement $\rho_C$ inclue des bits de queue si des codes conventionnels sont employés. Le mot codé entre dans un entrelaceur binaire bien conçu n, dont la matrice de sortie $A \in F_2^{Tq*PL}$ est segmenté en P matrices $A^P \in F_2^{Tq*PLP}$, p = 1, ..., P. Les colonnes de la matrice $A^P$ sont des vecteurs $a^p[n] \in F_2^{Tq}$, n = 1, ..., L, que l'on nomme « vecteur d'étiquette de symbole », contenant T sous vecteurs $a^p_t[n] \in F_2^q$, t = 1, ..., T (un par canal d'entrée), avec les composant binaires empilés $a^p_{<t,j>}[n]$, ... $a^p_{<t,j>}[n]$, où $<t,j>$ représente l'index (t - 1) q+j. Dans chaque matrice $A^P$, tous les vecteurs $a^p[n]$ sont modulés par un modulateur sans mémoire D-dimensionnel sur un ensemble de signal $A \subset C^D$ de cardinalité $|A| = 2^{qT}$ à travers le codage bit à symbole $\mu : \{0, 1\}^{qT} \rightarrow A$. Sans perte de généralité, nous supposons que A est un produit simple de T constellations complexes C de même ordre $2^q$ et que par constellation, un codage de Gray est utilisé. Après transformation du signal, ce processus de modulation codée peut être aussi considéré comme un schéma de modulation codée spatio-temporelle où tous les symboles complexes de mot code $P \times L \times T$ sont divisés en P matrices $Xp \in C^{T \times L}$, p = 1, ..., P, dont les colonnes $X^p[n]$

$\in C^T$, n = 1, ..., L sont nommées « vecteur de symbole de constellation ». Le « vecteur d'étiquette de symbole » $a^p$ [n] peut être obtenu de $x^p$ [n] par une simple inversion de codage bit à symbole $\mu^{-1}$. En tombant dans la classe générale des codes spatio-temporels, on appelle cette architecture Modulation Codée Spatio-Temporelle avec Entrelacement Binaire (STBICM) [3]. D'après l'hypothèse de filtrage idéal de Nyquist en bande limitée, le rendement de transmission (en bits par canal utilisé) est :

$$\rho = qT\rho_c.$$

Un schéma de principe relatif à ce modèle de communication est montré figure 1.

B. Canal MIMO

Soit $H^p \in C^{R \times T \times (M+1)}$ le canal MIMO pour le bloc p, où p = 1, ..., P et H = $(H^p)$ l'ensemble de tous les canaux. Soient également $X^p \in C^{T \times L}$ et $Y^p \in C^{R \times L}$ respectivement le « matrice de symbole de constellation » et la « matrice de sortie de canal ». La sortie vectorielle de canal en bande de base équivalente à temps discret $y^p$ [n] $\in C^R$ au temps n = 1, ..., L peut être écrite comme :

$$\mathbf{y}^p[n] = [\mathbf{H}(z)]\,\mathbf{x}^p[n] + \mathbf{w}^p[n] = \sum_{k=0}^{M} \mathbf{H}^p[k]\,\mathbf{x}^p[n-k] + \mathbf{w}^p[n] \qquad (2)$$

Où $x^p$ [n] $\in C^T$ sont le « vecteur de symbole de constellation » transmis aux temps n, l'énergie de chaque composante étant égale à $\sigma_x^2$ $H^p$ [k] $\in C^{R \times T}$ est la matrice du nombre de taps k de la réponse impulsionnelle du canal, $W^p$ [n] $\in C^R$ est le vecteur de bruit complexe additif. Les vecteurs de bruit complexe additif $W^p$ [n] sont supposés de moyenne nulle, indépendant identiquement distribués, et Gaussien complexes à symétrie circulaire, et suivent donc le pdf N (0, $\sigma^2$I). Le canal $H^p$, constant pendant la durée du bloc correspondant, a une réponse impulsionnelle finie (FIR) de longueur M+1, dont les taps de symbole d'espace $H^p$ [0] , ..., $H^p$ [M] sont les matrices aléatoires complexes R×T, de moyenne nulle et dont la puissance moyenne satisfait les contraintes de normalisation :

$$\mathbb{E}\left[\operatorname{diag}\left\{\sum_{k=0}^{M} \mathbf{H}^p[k]\,\mathbf{H}^p[k]^{\dagger}\right\}\right] = T\mathbf{I} \qquad (3)$$

dans le cas d'un système de puissance égale. L'opérateur « † » correspond à l'opérateur de transposée conjuguée. La mémoire de canal égale pour tous les liens R×T possibles est une hypothèse raisonnable étant donné que le nombre de composant individuel multivoies est dicté de manière prédominante par de larges structures et des objets réfléchissants.

Bloc itératif d'annulation d'interférence MIMO

A. Principe et ordonnancement

Le bloc itératif MIMO annulateur d'interférence traite chaque bloc de donnée reçus $Y^p$, p = 1, ..., P , séparément, en utilisant l'information probabiliste aléatoire renvoyée par le décodeur de sortie . Tous les signaux et éléments décrits sont donc indexés par bloc. Nous supprimons quelque fois cette dépendance pour simplifier les notations. Durant chaque itération I, un filtre avant linéaire F', appliqué à chaque symbole reçu de vecteur y [n], produit le signal de vecteur $y^1$ [n]. Puis une estimation construite de manière approprié $e^1$ [n] du MAI et du ISI altérant x [n] est soustraite du signal de vecteur $y^1$ [n] pour produire $z^1$ [n] :

$$\mathbf{z}^l[n] = \tilde{\mathbf{y}}^l[n] - \mathbf{e}^l[n] \qquad (8)$$

L'estimation du vecteur $e^l$ [n] provient de la sortie du filtre arrière $B^l$ excité par le vecteur $x^l$ [n] de tentative de décision souple sur le vecteur x[n], étant donné la connaissance préalable disponible (distribution de probabilité extrinsèque) à l'itération I - 1.

Nous arrivons maintenant au coeur du turbo-égaliseur MIMO, la dérivation des filtres à réponse impulsionnelle finie MIMO avant et arrière.

B. Calcul des filtres avant et arrière

Nous commençons par quelques manipulations de base sur la sortie instantanée $y^l[n]$ du filtre avant $F^l$ :

$$\bar{y}^l[n] = \sum_{i=-L_{F_1}}^{L_{F_2}} F^l[i]\, y[n-i] \tag{22}$$

Puisque :

$$y[n] = \sum_{k=0}^{M} H[k]\, x[n-k] + w[n] \tag{23}$$

Chaque échantillon $y^l[n]$ peut être développé comme suit :

$$\bar{y}^l[n] = \sum_{i=-L_{F_1}}^{L_{F_2}} \sum_{k=0}^{M} F^l[i]\, H[k]\, x[n-i-k] + \sum_{i=-L_{F_1}}^{L_{F_2}} F^l[i]\, w[n-i] \tag{24}$$

Une notation matricielle équivalente pour la convolution de deux filtre $H_C$ et $F^l$ est :

$$\bar{y}^l[n] = F^l H_c x_c[n] + F^l w_c[n] \tag{25}$$

Où:

$$F^l = \begin{bmatrix} F^l[-L_{F_1}] & \cdots & F^l[0] & \cdots & F^l[L_{F_2}] \end{bmatrix} \in \mathbb{C}^{T \times RL_F} \tag{26}$$

est le filtre avant d'ordre $L_F = L_{F1} + L_{F2} + 1$, où :

$$H_c = \begin{bmatrix} H[0] & H[1] & \cdots & H[M] & & & & \\ & H[0] & H[1] & \cdots & H[M] & & & \\ & & H[0] & H[1] & & H[M] & & \\ & & & \ddots & & & \ddots & \\ & & & & H[0] & H[1] & \cdots & H[M] \end{bmatrix} \in \mathbb{C}^{RL_F \times T(L_F+M)} \tag{27}$$

est la matrice de canal de bande-diagonale de Toeplitz et où :

$$\mathbf{x}_c\left[n\right] = \begin{bmatrix} \mathbf{x}\left[n + L_{F_1}\right] \\ \vdots \\ \mathbf{x}\left[n\right] \\ \vdots \\ \mathbf{x}\left[n - L_{F_2} - M\right] \end{bmatrix} \in \mathbb{C}^{T(L_F+M)} \tag{28}$$

est le vecteur transmis.

En introduisant le filtré combiné :

$$\mathbf{G}^l = \mathbf{F}^l\mathbf{H}_c = \left[\mathbf{G}^l\left[-L_{G_1}\right] \ \cdots \ \mathbf{G}^l\left[0\right] \ \cdots \ \mathbf{G}^l\left[L_{G_2}\right]\right] \in \mathbb{C}^{T \times TL_G} \tag{30}$$

On obtient l'expression finale :

$$\vec{\mathbf{y}}^l\left[n\right] = \mathbf{G}^l\mathbf{x}_c\left[n\right] + \mathbf{F}^l\mathbf{w}_c\left[n\right] \tag{31}$$

Avec $L_{G1} = L_{F1}$, $L_{G2} = L_{F2} + M$ et $L_G = L_F + M$.
Par analogie, on définit le filtre arrière comme suit :

$$\mathbf{B}^l = \left[\mathbf{B}^l\left[-L_{B_1}\right] \ \cdots \ 0 \ \cdots \ \mathbf{B}^l\left[L_{B_2}\right]\right] \in \mathbb{C}^{T \times TL_B} \tag{32}$$

La sortie du correcteur de brouillage peut être écrite :

$$\mathbf{z}^l\left[n\right] = \sum_k \mathbf{G}^l\left[k\right]\mathbf{x}\left[n - k\right] - \sum_k \mathbf{B}^l\left[k\right]\vec{\mathbf{x}}^l\left[n - k\right] + \sum_k \mathbf{F}^l\left[k\right]\mathbf{w}\left[n - k\right] \tag{33}$$

Le vecteur de bruit et de brouillage résiduel $\mathbf{v}^l[n]$ (dénommé aussi vecteur d'erreur de l'égaliseur MIMO) est exprimé comme suit :

$$\begin{aligned} \mathbf{v}^l\left[n\right] &= \mathbf{z}^l\left[n\right] - \mathbf{G}^l\left[0\right]\mathbf{x}\left[n\right] \\ &= \sum_{k \neq 0} \mathbf{G}^l\left[k\right]\mathbf{x}\left[n - k\right] - \sum_k \mathbf{B}^l\left[k\right]\vec{\mathbf{x}}^l\left[n - k\right] + \sum_k \mathbf{F}^l\left[k\right]\mathbf{w}\left[n - k\right] \\ &= \sum_k \underline{\mathbf{G}}^l\left[k\right]\mathbf{x}\left[n - k\right] - \sum_k \mathbf{B}^l\left[k\right]\vec{\mathbf{x}}^l\left[n - k\right] + \sum_k \mathbf{F}^l\left[k\right]\mathbf{w}\left[n - k\right] \end{aligned} \tag{34}$$

Où:

$$\underline{\mathbf{G}}^l = \left[\mathbf{G}^l\left[-L_{G_1}\right] \ \cdots \ 0 \cdots \mathbf{G}^l\left[L_{G_2}\right]\right] \tag{35}$$

Les filtres $F^l$ et $B^l$ sont calculés par blocs pour minimiser l'erreur quadratique moyenne de l'égaliseur MIMO, sous la contrainte $G^l[0] = I$, un problème qui dans le cas MIMO, peut être formulé de manière compact comme suit :

$$\left\{ \mathbf{F}^l, \mathbf{B}^l \right\} = \arg \min_{\{\mathbf{F},\mathbf{B}\}/\mathbf{G}^l[0]=\mathbf{I}} \operatorname{tr} \mathbb{E} \left\{ \mathbf{v}^l[n] \, \mathbf{v}^l[n-k]^\dagger \right\}$$

$$= \arg \min_{\{\mathbf{F},\mathbf{B}\}/\mathbf{G}^l[0]=\mathbf{I}} \operatorname{tr} \left\{ \mathbf{K}_v^l \right\}$$

La minimisation MSE est exécutée en deux étapes successives et donne finalement :

$$\mathbf{B}^l = \underline{\mathbf{G}}^l \tag{37}$$

$$\mathbf{F}^l = \left( \mathbf{E}_\Delta \mathbf{H}_c^\dagger \Phi^{l^{-1}} \mathbf{H}_c \mathbf{E}_\Delta^\dagger \right)^{-1} \mathbf{E}_\Delta \mathbf{H}_c^\dagger \Phi^{l^{-1}} \tag{38}$$

Où:

$$\mathbf{E}_\Delta = \underbrace{[\cdots \mathbf{0} \cdots}_{L_{G_1}} \underbrace{\mathbf{I} \cdots \mathbf{0} \cdots]}_{L_{G_2}} \in \mathbb{C}^{T \times TL_G} \tag{39}$$

et où :

$$\Phi^l = \left[ \left( \sigma_x^2 - \sigma_{\tilde{x}}^{l2} \right) \mathbf{H}_c \mathbf{H}_c^\dagger + \sigma^2 \mathbf{I} \right] \tag{40}$$

avec :

$$\sigma_{\tilde{x}}^{l2} \simeq \frac{1}{LT} \sum_{n=1}^{L} \tilde{x}^l[n]^\dagger \tilde{x}^l[n] \tag{41}$$

Nous insistons sur le fait que le bruit plus le brouillage résiduel à la sortie du soustracteur est corrélé spatialement et temporellement. La corrélation temporelle n'a pas d'impact réel sur les traitements suivant, la corrélation spatiale joue un rôle ici essentiel. Le bruit blanc spatial peut être aisément obtenu par une simple factorisation de Cholesky de la matrice de corrélation $K_y^l$.

*Proposition 2 :* Puisque la matrice de corrélation $K_y^l$ est définie positive, la factorisation de Cholesky est toujours applicable. Sachant cela :

$$\mathbf{K}_v^l = \mathbf{L} \mathbf{L}^\dagger \tag{42}$$

Où L est une matrice triangulaire inférieure. Ensuite, en appliquant $F^{l'} = L^{-1} F^l$ et $B^{l'} = L^{-1} B^l$ comme filtre avant et filtre arrière (au lieu de $F^l$ et $B^l$), la matrice de corrélation de brouillage plus bruit égale à la matrice identité.

Preuve : La preuve est immédiate.

$$\mathbf{K}_{\mathbf{v}}^{l'} = \left[ \left(\sigma_{\mathbf{x}}^2 - \sigma_{\overline{\mathbf{x}}}^2\right) \mathbf{L}^{-1} \mathbf{B}^l \mathbf{B}^{l\dagger} \left(\mathbf{L}^{-1}\right)^{\dagger} + \sigma^2 \mathbf{L}^{-1} \mathbf{F}^l \mathbf{F}^{l\dagger} \left(\mathbf{L}^{-1}\right)^{\dagger} \right]$$

$$= \mathbf{L}^{-1} \left[ \left(\sigma_{\mathbf{x}}^2 - \sigma_{\overline{\mathbf{x}}}^2\right) \mathbf{B}^l \mathbf{B}^{l\dagger} + \sigma^2 \mathbf{F}^l \mathbf{F}^{l\dagger} \right] \left(\mathbf{L}^{-1}\right)^{\dagger} = \mathbf{L}^{-1} \mathbf{K}_{\mathbf{v}}^l \left(\mathbf{L}^{-1}\right)^{\dagger} = \mathbf{I} \qquad (43)$$

Valide l'algorithme proposé par la simulation de la figure 3.

Dans la suite, nous considérons toujours la sortie de l'égaliseur avec blanchiment spatial de sorte que :

$$\mathbf{z}^l\left[n\right] = \mathbf{G}^l[0]\mathbf{x}[n] + \mathbf{v}^l[n]$$

Avec $\mathbf{K}_{\mathbf{v}}^l = \mathbf{I}$ et $\mathbf{G}^l[0] = \mathbf{L}^{-1}$

Il est intéressant de remarquer que le critère MMSE correspond à une maximisation du SNR $\mathrm{tr}\{\mathbf{G}^l[0]^{+}\mathbf{K}_{\mathbf{v}}^l\mathbf{G}^l[0]\}$. Le SNR maximal donné pour le filtre adapté est atteint pour $\sigma_{\mathbf{x}}^2 = \sigma_{\mathbf{x}}^2$.

## C. Décodeur APP exhaustif .

Nous définissons ici toutes les quantités probabilistes échangées au cours des itérations. La partie détection de l'égaliseur MIMO a pour but de fournir les informations extrinsèques sur les bits des symboles de la matrice A selon le nouveau modèle de communication (10) où $\mathbf{G}^l[0]$ joue le rôle d'un canal plat MIMO équivalent $T \times T$ et $\mathbf{v}'[n]$ est l'interférence résiduelle plus bruit blanchi. Les rapports logarithmique APP sur tous les bits des symboles a<t,j>[n] sont définis comme suit :

$$\lambda_{(t,j)}^{l,d}[n] = \ln \frac{\mathrm{Pr}\left[a_{(t,j)}[n] = 1 \,\middle|\, \mathbf{z}^l[n]\right]}{\mathrm{Pr}\left[a_{(t,j)}[n] = 0 \,\middle|\, \mathbf{z}^l[n]\right]} \qquad (11)$$

Par simple marginalisation, on obtient :

$$\lambda_{(t,j)}^{l,d}[n] = \ln \frac{\sum_{\mathbf{a}\in\Omega_{(t,j)}^{(1)}} \mathrm{Pr}^l\left[\mathbf{x}[n] = \mu(\mathbf{a}) \,\middle|\, \mathbf{z}^l[n]\right]}{\sum_{\mathbf{a}\in\Omega_{(t,j)}^{(0)}} \mathrm{Pr}^l\left[\mathbf{x}[n] = \mu(\mathbf{a}) \,\middle|\, \mathbf{z}^l[n]\right]} \qquad (12)$$

où:

$$\Omega_{(t,j)}^{(\varepsilon)} = \left\{ \mathbf{a} \in \mathbb{F}_2^{qT}, \; a_{(t,j)} = \varepsilon \right\} \qquad (13)$$

Les rapports logarithmiques APP peuvent être développés comme :

$$\lambda_{(t,j)}^{l,d}[n] = \ln \frac{\sum_{\mathbf{a}\in\Omega_{(t,j)}^{(1)}} p\left(\mathbf{z}^l[n] \,\middle|\, \mathbf{x} = \mu(\mathbf{a})\right) \mathrm{Pr}^l[\mathbf{a}[n] = \mathbf{a}]}{\sum_{\mathbf{a}\in\Omega_{(t,j)}^{(0)}} p\left(\mathbf{z}^l[n] \,\middle|\, \mathbf{x} = \mu(\mathbf{a})\right) \mathrm{Pr}^l[\mathbf{a}[n] = \mathbf{a}]} \qquad (14)$$

En supposant un entrelacement spatio-temporel parfait autorise de diffuser les probabilités précédemment jointes dans le produit de leur composant à chiffre marginal :

$$\lambda_{\{t,j\}}^{l,d}[n] = \ln \frac{\sum_{\mathbf{a}\in\Omega_{\{t,j\}}^{(1)}} p\left(\mathbf{z}^l[n] \mid \mathbf{x} = \mu(\mathbf{a})\right) \prod_{\{t,j\}} \Pr^l\left[a_{\{t,j\}}[n] = a_{\{t,j\}}\right]}{\sum_{\mathbf{a}\in\Omega_{\{t,j\}}^{(0)}} p\left(\mathbf{z}^l[n] \mid \mathbf{x} = \mu(\mathbf{a})\right) \prod_{\{t,j\}} \Pr^l\left[a_{\{t,j\}}[n] = a_{\{t,j\}}\right]} \qquad (15)$$

En supposant que $v^l[n]$ a été blanchi spatialement par un moyen quelconque (exemple factorisation de Cholesky), la métrique Euclidienne peut être utilisée dans l'évaluation de la probabilité :

$$p\left(\mathbf{z}^l[n] \mid \mathbf{x}\right) \propto \exp\left\{-\frac{1}{2\sigma^2} \left\| \mathbf{z}^l[n] - \mathbf{G}^l[0]\mathbf{x}\right\|^2\right\} \qquad (16)$$

Dans le cas général, la matrice de corrélation $K^l_v$ du vecteur de bruit doit être prise en compte dans l'évaluation de la probabilité :

$$p\left(\mathbf{z}^l[n] \mid \mathbf{x}\right) \propto \exp\left\{-\left(\mathbf{z}^l[n] - \mathbf{G}^l[0]\mathbf{x}\right)^t K_v^{-1}\left(\mathbf{z}^l[n] - \mathbf{G}^l[0]\mathbf{x}\right)\right\} \qquad (17)$$

Comme il est établi dans le domaine des turbo-détecteurs, les taux de probabilité extrinsèque logarithmique sont déduit selon la formule :

$$\zeta_{\{t,j\}}^{l,d}[n] = \ln \frac{\sum_{\mathbf{a}\in\Omega_{\{t,j\}}^{(1)}} p\left(\mathbf{z}^l[n] \mid \mathbf{x} = \mu(\mathbf{a})\right) \prod_{\{t',j'\}\neq\{t,j\}} \Pr^l\left[a_{\{t',j'\}}[n] = a_{\{t',j'\}}\right]}{\sum_{\mathbf{a}\in\Omega_{\{t,j\}}^{(0)}} p\left(\mathbf{z}^l[n] \mid \mathbf{x} = \mu(\mathbf{a})\right) \prod_{\{t',j'\}\neq\{t,j\}} \Pr^l\left[a_{\{t',j'\}}[n] = a_{\{t',j'\}}\right]} \qquad (18)$$

Tous les échantillons d'information extrinsèque logarithmique du détecteur MIMO sont collectés à partir de tous les blocs p = 1, ..., P et réarrangés, après le désentrelacement spatio-temporel $\Pi^{-1}$, en un vecteur d'observation simple $\zeta^{l,c} \in R^N$, sur la base duquel le décodeur de sortie fourni les rapports de probabilité extrinsèque logarithmique sur tous les bits de mots code :

$$\xi^{l,c}[n] = \ln \frac{\Pr\left[c[n] = 1 \mid \mathfrak{C}, \zeta^{l,c} / \{\zeta^{l,c}[n]\}\right]}{\Pr\left[c[n] = 0 \mid \mathfrak{C}, \zeta^{l,c} / \{\zeta^{l,c}[n]\}\right]} \qquad (19)$$

Après le désentrelacement spatio-temporel $\Pi$, le vecteur $\xi^{l,c}$ est diffusé dans P matrices $\Pi^{l,p}$ de taux de probabilité précédente logarithmique, un pour chaque bloc de données $A^p$. Pour chaque bloc p = 1, ..., P, les entrées de $\Pi^{l,p}$ sont données par :

$$\pi_{\{t,j\}}^l[n] = \ln \frac{\Pr^l\left[a_{\{t,j\}}[n] = 1\right]}{\Pr^l\left[a_{\{t,j\}}[n] = 0\right]} \qquad (20)$$

Ceci permet de réécrire le vecteur $x^l[n]$ de prise de décision soft comme :

$$\bar{\mathbf{x}}^l[n] = \frac{1}{2}\sum_{\mathbf{x}\in C^T} \mathbf{x} \prod_{\{t,j\}} \left\{1 + \left(2\mu_{\{t,j\}}^{-1}(\mathbf{x}) - 1\right) \tanh\left(\frac{\pi_{\{t,j\}}^l[n]}{2}\right)\right\} \qquad (21)$$

## D. Détection MIMO quasi-optimal par l'intermédiaire du décodeur à sphère à liste modifiée

La détection MIMO optimal ne peut pas être retenue pour un scénarii de communication haut débit. En effet, l'énumération de point des sous-ensembles entiers de constellation $\Omega^{<0>}_{<t,j>}$ et $\Omega^{<1>}_{<t,j>}$, dont la cardinalité varie dans $O(2^{qT})$, peut rapidement devenir accablante pour des modulations d'ordre supérieur et/ou un grand nombre d'antennes de transmission. Une analyse soigneuse des valeurs de probabilité indique qu'un grand nombre d'entre elles sont négligeables. Par conséquent, comme contribution significative de cet article, nous suggérons de remplacer l'énumération approfondie de point par une énumération de point des sous-ensemble $L^{<0>}_{<t,j>}$ et $L^{<1>}_{<t,j>}$ de taille fortement réduite, sous ensemble aussi appelés liste, qui contiennent uniquement les probabilités non négligeables. Les rapports de probabilité extrinsèque logarithmique deviennent alors :

$$\xi^{l,d}_{(t,j)}[n] = \ln \frac{\sum_{\mathbf{a}\in\Omega^{(1)}_{(t,j)}} p\left(z^l[n]|\mathbf{x}=\mu(\mathbf{a})\right) \prod_{\{u,j'\}\neq\{t,j\}} \Pr^l\left[a_{(u,j')}[n]=a_{(u,j')}\right]}{\sum_{\mathbf{a}\in\Omega^{(0)}_{(t,j)}} p\left(z^l[n]|\mathbf{x}=\mu(\mathbf{a})\right) \prod_{\{u,j'\}\neq\{t,j\}} \Pr^l\left[a_{(u,j')}[n]=a_{(t,j')}\right]} \quad (18)$$

En termes géométriques, contiennent des points du treillis dans une sphère de rayon r centrée sur un point bien choisi (par exemple le point ML sans contrainte ou le point ML lui-même). Des versions modifiées de décodeur à sphère ont été employées avec un certain succès pour exhiber ces listes [2]. Le choix du rayon de sphère r pilote la qualité et la complexité du détecteur MIMO correspondant.

## E. Algorithme de détection PIC

Le décodeur à sphère peut également être considéré comme trop complexe. Une manière possible d'alléger encore la complexité du détecteur est de générer l'APP log indépendamment par dimension. La variable de décision pour le composant x est, à l'itération l :

$$r^l_t[n] = \left(g^\dagger_t g_t\right)^{-1} g^\dagger_t \left(z^l[n] - \sum_{k\neq t} g_k \overline{x_k}\right)$$

Où $g_k$ est la colonne k de la matrice GI[O]. Les rapports APP log $\xi^l$<t,j>[n], j= 1,..., q sont alors calculés en supposant que $rl_t[n]$ est une variable gaussienne de moyenne $x_t$, et de variance estimée :

$$\hat{\sigma}^2_{t,l} = \frac{1}{L} \sum_{n=1}^{L} \left|r^l_t[n]\right|^2 - \sigma^2_x$$

Le premier détecteur d'itération peut être amélioré en utilisant une technique SIC de la façon suivante :

• Initialisation

Classifier les composants par ordre décroissant en fonction de leur rapport signal sur parasite (SIR), par exemple :

$$SIR(x_1) > SIR(x_2) > \cdots > SIR(x_T)$$

avec :

$$SIR(x_i) = \frac{\mathbf{g}_i^\dagger \mathbf{g}_i}{\sum\limits_{k \neq i} \mathbf{g}_k^\dagger \mathbf{g}_k + \sigma^2}$$

Récursivité
**Pour t =1 à T**
Calcul de :

$$r_t^1[n] = \left(\mathbf{g}_t^\dagger \mathbf{g}_t\right)^{-1} \mathbf{g}_t^\dagger \left(\mathbf{z}^1[n] - \sum\nolimits_{k<t} \mathbf{g}_k \widetilde{x_k}[n]\right)$$

Calcul du rapport APP log $\xi^l$<t,j>[n], j= 1,..., q en supposant que $r^l_t[n]$ est une variable gaussienne de moyenne $x_t$, et de variance estimée :

$$\hat{\sigma}_{t,l}^2 = \frac{1}{L} \sum_{n=1}^{L} \left| r_t^l[n] \right|^2 - \sigma_{\mathbf{x}}^2$$

Calcul l'estimation MMSE de $x^t$ connaissant $r^l_t[n]$ :

$$\widetilde{x_t}[n] = E\left\{ x_t[n] \,\middle|\, r_t^1[n] \right\}$$

Annexe III

BIBLIOGRAPHIE

Les références :

[1] S. Ariyavisitakul, " Turbo Space-Time Processing to Improve Wireless Channel Capacity," IEEE Trans. Commun., vol. COM-48, no. 8, pp. 1347-1358, Aug. 2000.
[2] B. M. Hochwald, S. Ten Brink, "Achieving Near-Capacity on a Multiple-Antenna Channel," IEEE Trans. Commun., vol. 51, no. 3, pp. 389-399, March 2003.
[3] R. Visoz, A.O. Berthet, "Itérative Decoding and Channel Estimation for Space-Time BICM over MIMO Block Fading Multipath AWGN Channel," IEEE Trans. Commun., vol. COM-51, no. 8, pp. 1358-1367, Aug. 2003.
[4] X. Wang, H.V. Poor, "Itérative (Turbo) Soft-Interference Cancellation and Decoding for Coded CDMA," IEEE Trans. Commun., vol. COM-47, no. 7, pp. 1046-1061, July 1999.

**Revendications**

1. Dispositif d'égalisation et de décodage itératif pour communications haut-débit sur canaux sélectifs en fréquence à antennes multiples en émission (TX) et en réception (RX), comportant :

    - un égaliseur à retour de décision, recevant des données des antennes de réception (RX), et
    - un décodeur (13) de canal à entrées et sorties pondérées,

    ledit égaliseur à retour de décision comportant :

- un filtre avant (9,F) recevant les données des antennes de réception ;
- un filtre arrière (12,B) récursif, alimenté par une reconstitution pondérée des données calculées à partir de la sortie dudit décodeur (13) ;
- des moyens pour soustraire (10) la sortie dudit filtre arrière (12,B) aux données en sortie dudit filtre avant (9,F) ; et
- des moyens de prise de décision (11) comportant en entrée les données obtenues en sortie desdits moyens de soustraction (10) et la sortie dudit décodeur (13), et lesdits moyens de prise de décision étant adaptés à prendre en compte la corrélation spatiale de l'erreur de l'égaliseur en sortie desdits moyens de soustraction (10) et à générer des informations probabilistes transmises à destination dudit décodeur de canal (13) après application d'un procédé d'entrelacement ($\Pi$, $\Pi^{-1}$) spatio-temporel au niveau binaire ;

les filtres avant (9,F) et arrière (12,B) sont adaptés de façon itérative pour minimiser l'erreur quadratique moyenne en sortie desdits moyens de soustraction.

**2.** Dispositif selon la revendication 1, **caractérisé en ce qu'**il comporte des moyens permettant de blanchir ladite erreur de l'égaliseur, lesdits moyens étant mis en oeuvre en sortie desdits moyens de soustraction (10).

**3.** Dispositif selon la revendication 1, **caractérisé en ce que** lesdits moyens de prise de décision (11) comportent des moyens pour mettre en oeuvre un algorithme de type SIC/PIC permettant de supprimer l'interférence spatiale résiduelle en sortie desdits moyens de soustraction (10) en série et/ou en parallèle.

**4.** Dispositif selon la revendication 1, **caractérisé en ce que** lesdits moyens de prise de décision (11) comportent des moyens permettant de blanchir spatialement ladite erreur de l'égaliseur.

**5.** Dispositif selon la revendication 1 ou 4, **caractérisé en ce que** lesdits moyens de prise de décision (11) comportent des moyens pour mettre en oeuvre un algorithme de décodage par sphère.

**6.** Dispositif selon la revendication 1, **caractérisé en ce que** lesdits filtres avant (9,F) et arrière (12,B) sont dérivés pour permettre en outre de blanchir ladite erreur de l'égaliseur.

**7.** Dispositif selon l'une quelconque des revendications 1 à 6, **caractérisé en ce que**, à partir d'une certaine itération, ledit filtre avant (9,F) est un filtre adapté (M).

**8.** Système de communication haut débit sur canaux sélectifs en fréquences à antennes multiples en émission et en réception, **caractérisé en ce qu'**il comporte en réception un dispositif d'égalisation et de décodage adaptatif selon l'une quelconque des revendications 1 à 7.

**9.** Système selon la revendication 8, **caractérisé en ce qu'**il comporte des moyens d'émission de type ST-BICM.

**10.** Procédé d'égalisation et de décodage itératif pour communications haut-débit sur canaux sélectifs en fréquence à antennes multiples en émission (TX) et en réception (RX), comportant :

- une étape d'égalisation à retour de décision des données reçues des antennes de réception (RX), et
- une étape de décodage à l'aide d'un décodeur de canal (13) à entrées et sorties pondérées,

ladite étape d'égalisation à retour de décision comportant :

- une étape de filtrage par un filtre avant (9,F) desdites données reçues ;
- une étape de filtrage par un filtre arrière (12,B) récursif d'une reconstitution pondérée des données calculées à partir de la sortie dudit décodeur (13) ;
- une étape de soustraction de la sortie dudit filtre arrière (12,B) aux données en sortie dudit filtre avant (9,F) ; et
- une étape de détection appliquée aux données obtenues suite à l'étape de soustraction et aux données en sortie dudit décodeur (13), ladite étape de détection étant adaptée à prendre en compte la corrélation spatiale de l'erreur de l'égaliseur obtenue en sortie de ladite étape de soustraction et permettant de générer des informations probabilistes transmises à destination dudit décodeur de canal (13) après une étape d'entrelacement ($\Pi$,$\Pi^{-1}$) spatio-temporel au niveau binaire ;

les filtres avant (9,F) et arrière (12,B) sont adaptés de façon itérative pour minimiser l'erreur quadratique moyenne obtenue suite à l'étape de soustraction.

**11.** Procédé selon la revendication 10 **caractérisé en ce qu'**il comporte en outre une étape consistant à blanchir ladite erreur de l'égaliseur obtenue en sortie de ladite étape de soustraction.

**12.** Procédé selon la revendication 10 ou 11, **caractérisé en ce que** ladite étape de détection met en oeuvre notamment un algorithme de décodage par sphère.

**Claims**

**1.** Iterative equalization and decoding device for high bit rate communications over frequency-selective channels with multiple transmit (TX) and receive (RX) antennas, comprising:

- a decision feedback equalizer, receiving data from the receive antennas (RX), and
- a channel decoder (13) with weighted inputs and outputs,

said decision feedback equalizer comprising:

- a forward filter (9,F) receiving the data from the receive antennas;
- a recursive backward filter (12, B), fed with a weighted reconstruction of the data calculated on the basis of the output of said decoder (13);
- means for subtracting (10) the output of said backward filter (12, B) from the data at the output of said forward filter (9, F); and
- decision-taking means (11) comprising as input the data obtained as output from said subtraction means (10) and the output of said decoder (13), and said decision-taking means being adapted to take account of the spatial correlation of the error of the equalizer at the output of said subtraction means (10) and to generate probabilistic information transmitted to said channel decoder (13) after applying a spatio-temporal interleaving method ($\Pi$, $\Pi^{-1}$) at the binary level;

the forward (9,F) and backward (12,B) filters are adapted in an iterative manner so as to minimize the mean square error at the output of said subtraction means.

**2.** Device according to Claim 1, **characterized in that** it comprises means making it possible to whiten said error of the equalizer, said means being implemented at the output of said subtraction means (10).

**3.** Device according to Claim 1, **characterized in that** said decision-taking means (11) comprise means for implementing an algorithm of SIC/PIC type making it possible to remove the residual spatial interference at the output of said subtraction means (10) in series and/or in parallel.

**4.** Device according to Claim 1, **characterized in that** said decision-taking means (11) comprise means making it possible to spatially whiten said error of the equalizer.

**5.** Device according to Claim 1 or 4, **characterized in that** said decision-taking means (11) comprise means for implementing a sphere decoding algorithm.

**6.** Device according to Claim 1, **characterized in that** said forward (9,F) and backward (12,B) filters are derived so as to make it possible moreover to whiten said error of the equalizer.

**7.** Device according to any one of Claims 1 to 6, **characterized in that**, starting from a certain iteration, said forward filter (9,F) is a matched filter (M).

**8.** System for high bit rate communication over frequency-selective channels with multiple transmit and receive antennas, **characterized in that** it comprises in reception an adaptive equalization and decoding device according to any one of Claims 1 to 7.

**9.** System according to Claim 8, **characterized in that** it comprises transmit means of ST-BICM type.

10. Iterative equalization and decoding method for high bit rate communications over frequency-selective channels with multiple transmit (TX) and receive (RX) antennas, comprising:

- a step of decision feedback equalizing of the data received from the receive antennas (RX), and
- a step of decoding with the aid of a channel decoder (13) with weighted inputs and outputs,

said decision feedback equalizing step comprising:

- a step of filtering said received data by a forward filter (9,F),
- a step of filtering a weighted reconstruction of the data calculated on the basis of the output of said decoder (13) by a backward filter (12,B);
- a step of subtracting the output of said backward filter (12,B) from the data at the output of said forward filter (9,F); and
- a step of detecting applied to the data obtained following the subtracting step and to the data at the output of said decoder (13), said detecting step being adapted to take account of the spatial correlation of the error of the equalizer obtained as output from said subtracting step and making it possible to generate probabilistic information transmitted to said channel decoder (13) after a step of spatio-temporal interleaving ($\Pi$, $\Pi^{-1}$) at the binary level ;

the forward (9,F) and backward (12,B) filters are adapted in an iterative manner so as to minimize the mean square error obtained following the subtracting step.

11. Method according to Claim 10, **characterized in that** it furthermore comprises a step consisting in whitening said equalizer error obtained at the output of said subtracting stop.

12. Method according to Claim 10 or 11, **characterized in that** said detecting step implements in particular a sphere decoding algorithm.

**Patentansprüche**

1. Vorrichtung zur Entzerrung und zur iterativen Decodierung für Kommunikationen mit hohem Durchsatz in frequenzselektiven Kanälen mit mehreren Sende- (TX) und Empfangsantennen (RX), die aufweist :

- einen Entzerrer mit Entscheidungsrückkopplung, der Daten von den Empfangsantennen (RX) empfängt, und
- einen Kanaldecodierer (13) mit gewichteten Eingängen und Ausgängen,

wobei der Entzerrer mit Entscheidungsrückkopplung aufweist:

- ein vorderes Filter (9,F), das die Daten von den Empfangsantennen empfängt;
- ein hinteres rekursives Filter (12,B), das von einer gewichteten Wiederherstellung der Daten gespeist wird, die ausgehend vom Ausgang des Decodierers (13) berechnet werden;
- Mittel (10), um den Ausgang des hinteren Filters (12,B) von den Daten am Ausgang des vorderen Filters (9,F) zu subtrahieren; und
- Entscheidungsmittel (11), die am Eingang die am Ausgang der Subtraktionsmittel (10) erhaltenen Daten und den Ausgang des Decodierers (13) aufweisen, und wobei die Entscheidungsmittel geeignet sind, um die räumliche Korrelation des Fehlers des Entzerrers am Ausgang der Subtraktionsmittel (10) zu berücksichtigen, und um probabilistische Informationen zu erzeugen, die nach Anwendung eines raum-zeitlichen Verschachtelungs-verfahrens ($\Pi$, $\Pi^{-1}$) auf Binärebene an den Kanaldecodierer (13) übertragen werden ;

wobei das vordere (9,F) und das hintere Filter (12,B) iterativ angepasst sind, um den mittleren quadratischen Fehler am Ausgang der Subtraktionsmittel zu minimieren.

2. Vorrichtung nach Anspruch 1, **dadurch gekennzeichnet, dass** sie Mittel aufweist, die es ermöglichen, den Fehler des Entzerrers zu "weißen", wobei diese Mittel am Ausgang der Subtraktionsmittel (10) eingesetzt werden.

3. Vorrichtung nach Anspruch 1, **dadurch gekennzeichnet, dass** die Entscheidungsmittel (11) Mittel aufweisen, um einen Algorithmus vom Typ SIC/PIC anzuwenden, der es ermöglicht, die räumliche Restinterferenz am Ausgang der Subtraktionsmittel (10) in Reihe und/oder parallel zu unterdrücken.

4. Vorrichtung nach Anspruch 1, **dadurch gekennzeichnet, dass** die Entscheidungsmittel (11) Mittel aufweisen, die es ermöglichen, den Fehler des Entzerrers -räumlich zu weißen.

5. Vorrichtung nach Anspruch 1 oder 4, **dadurch gekennzeichnet, dass** die Entscheidungsmittel (11) Mittel aufweisen, um einen Sphere-Decoding-Algorithmus einzusetzen.

6. Vorrichtung nach Anspruch 1, **dadurch gekennzeichnet, dass** das vordere (9,F) und das hintere Filter (12,B) abgeleitet werden, um es außerdem zu ermöglichen, den Fehler des Entzerrers zu weißen.

7. Vorrichtung nach einem der Ansprüche 1 bis 6, **dadurch gekennzeichnet, dass** ausgehend von einer bestimmten Iteration das vordere Filter (9,F) ein angepasstes Filter (M) ist.

8. Hochgeschwindigkeits-Kommunikationssystem in frequenzselektiven Kanälen mit mehreren Sende- und Empfangsantennen, **dadurch gekennzeichnet, dass** es auf der Eingangsseite eine Vorrichtung zur Entzerrung und adaptiven Decodierung nach einem der Ansprüche 1 bis 7 aufweist.

9. System nach Anspruch 8, **dadurch gekennzeichnet, dass** es Sendemittel vom Typ ST-BICM aufweist.

10. Verfahren zur Entzerrung und zur iterativen Decodierung für Kommunikationen mit hohem Durchsatz in frequenzselektiven Kanälen mit mehreren Sende- (TX) und Empfangsantennen (RX), das aufweist:

  - einen Schritt der Entzerrung mit Entscheidungsrückkopplung der von den Empfangsantennen (RX) empfangenen Daten, und
  - einen Schritt der Decodierung mit Hilfe eines Kanaldecodierers (13) mit gewichteten Eingängen und Ausgängen,

wobei der Schritt der Entzerrung mit Entscheidungsrückkopplung aufweist:

  - einen Schritt der Filterung der empfangenen Daten durch ein vorderes Filter (9,F) ;
  - einen Schritt der Filterung einer gewichteten Wiederherstellung der Daten durch ein hinteres rekursives Filter (12,B), die ausgehend vom Ausgang des Decodierers (13) berechnet werden;
  - einen Schritt der Subtraktion des Ausgangs des hinteren Filters (12,B) von den Daten am Ausgang des vorderen Filters (9,F); und
  - einen Erfassungsschritt, der an die nach dem Schritt der Subtraktion erhaltenen Daten und an die Daten am Ausgang des Decodierers (13) angewendet wird, wobei der Erfassungsschritt geeignet ist, um die räumliche Korrelation des Fehlers des Entzerrers zu berücksichtigen, die am Ausgang des Subtraktionsschritts erhalten wird und es ermöglicht, probabilistische Informationen zu erzeugen, die nach einem Schritt der raum-zeitlichen Verschachtelung $(\Pi,\Pi^{-1})$ auf Binärebene an den Kanaldecodierer (13) übertragen werden;

wobei das vordere (9,F) und das hintere Filter (12,B) iterativ angepasst sind, um den mittleren quadratischen Fehler zu minimieren, der nach dem Subtraktionsschritt erhalten wird.

11. Verfahren nach Anspruch 10, **dadurch gekennzeichnet, dass** es außerdem einen Schritt aufweist, der darin besteht, den Fehler des Entzerrers zu weißen, der am Ausgang des Subtraktionsschritts erhalten wird.

12. Verfahren nach Anspruch 10 oder 11, **dadurch gekennzeichnet, dass** der Erfassungsschritt insbesondere einen Sphere-Decoding-Algorithmus anwendet.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YU X.** Interactive turbo decoder with decision feedback equalizer for signals transmitted over multipath channels. *Veh. Tech. Conf.,* vol. 3, 1634-1638
- **S. ARIYAVISITAKUL.** Turbo Space-Time Processing to Improve Wireless Channel Capacity. *IEEE Trans. Commun.,* Août 2000, vol. COM-48 (8), 1347-1358
- **B. M. HOCHWALD ; S. TEN BRINK.** Achieving Near-Capacity on a Multiple-Antenna Channel. *IEEE Trans. Commun.,* Mars 2003, vol. 51 (3), 389-399
- **R. VISOZ ; A.O. BERTHET.** Itérative Decoding and Channel Estimation for Space-Time BICM over MIMO Block Fading Multipath AWGN Channel. *IEEE Trans. Commun.,* Août 2003, vol. COM-51 (8), 1358-1367
- **X. WANG ; H.V. POOR.** Itérative (Turbo) Soft-Interference Cancellation and Decoding for Coded CDMA. *IEEE Trans. Commun.,* Juillet 1999, vol. COM-47 (7), 1046-1061